# EUROPÄISCHE PATENTSCHRIFT

(11) **EP 3 050 671 B1**
(45) Veröffentlichungstag und Bekanntmachung des Hinweises auf die Patenterteilung: **20.11.2019**
(21) Anmeldenummer: 16153955.6
(22) Anmeldetag: 02.02.2016
(51) Int. Cl.: B23Q 3/155, B23Q 3/157

(54) **WERKZEUGMAGAZIN**
TOOL MAGAZINE
MAGASIN D'OUTILS

(30) Priorität: 02.02.2015 DE 102015201779
(43) Veröffentlichungstag der Anmeldung: 03.08.2016
(73) Patentinhaber: Deckel Maho Seebach GmbH, 99846 Seebach (DE)
(72) Erfinder: TÜLLMANN, Udo, 99817 Eisenach (DE); KÜMMEL, Stephan, 99817 Eisenach (DE); KRETZSCHMAR, Andreas, 02733 Cunewalde (DE); HEUMANN, Andreas, 08543 Pöhl (DE)
(74) Vertreter: MERH-IP Matias Erny Reichl Hoffmann Patentanwälte PartG mbB

(56) Entgegenhaltungen:
- DE-U1-202015 000 661
- JP-A- H1 148 075
- JP-A- 2004 160 595
- JP-U- S6 154 438
- US-A1- 2014 274 626
- US-B1- 7 575 543

## Beschreibung

Die vorliegende Erfindung betrifft ein Werkzeugmagazin nach dem Oberbegriff des Anspruchs 1 zum Einsatz an einer Werkzeugmaschine (siehe z.B. JP-2004160595).

### HINTERGRUND DER ERFINDUNG

Werkzeugmaschinen sind häufig mit einem Werkzeugmagazin ausgerüstet, um die Bearbeitung eines Werkstücks mit mehreren Werkzeugen zu ermöglichen. Die Werkzeuge, die gerade nicht verwendet werden, sind im Werkzeugmagazin abgelegt. Dabei weist das Werkzeugmagazin eine Werkzeugmagazinkette auf, an deren einzelnen Kettengliedern die Werkzeuge befestigt sind. Befindet sich ein Werkzeug an einer bestimmten Position im Werkzeugmagazin, kann es dort aus dem Magazin entnommen werden und zur Werkstückbearbeitung in den Arbeitsraum der Werkzeugmaschine gebracht werden. Wenn zu einem späteren Zeitpunkt die Bearbeitung mit einem anderen Werkzeug fortgeführt werden soll, läuft die Werkzeugmagazinkette so lange um, bis das andere Werkzeug die Werkzeugentnahmeposition erreicht und das aktuelle Werkzeug durch das andere Werkzeug ausgetauscht werden kann.

Dabei läuft die Kette üblicherweise auf einer Bahn um, die durch zwei gleich lange, parallele Strecken gebildet wird, deren Enden über zwei sich gegenüberliegende Kreisbögen verbunden sind.

Ein solcher Aufbau bereitet jedoch Probleme, wenn eine hohe Magazinkapazität für mindestens 60 Werkzeuge gewünscht ist, da sich der Platzbedarf für die Umlaufbewegung der Kette und somit für das Werkzeugmagazin wesentlich erhöht. Gleichzeitig verringert sich die Stabilität der Magazinkonstruktion, wenn durch die größere Anzahl an Werkzeugen ein wesentlich höheres Gewicht in Bewegung gesetzt werden muss, sobald ein Werkzeugwechsel durchgeführt werden soll, wodurch die Geschwindigkeit des Werkzeugwechsels begrenzt wird.

### ZUSAMMENFASSUNG DER ERFINDUNG

Eine Aufgabe der vorliegenden Erfindung ist es daher, ein Werkzeugmagazin für eine Werkzeugmaschine bereitstellen zu können, mit dem eine hohe Magazinkapazität bei kompakter Bauform des Magazins realisiert werden kann, wobei die Konstruktion gleichzeitig eine hohe Stabilität sowohl in Bezug auf die Umlaufbewegung der Kette als auch in Bezug auf eine Kippbewegung des Werkzeugs von einer Transportposition des Werkzeugs in eine Wechselposition des Werkzeugs aufweist.

Diese Aufgabe wird gelöst durch ein Werkzeugmagazin gemäß Patentanspruch 1 bzw. eine Werkzeugmaschine gemäß Anspruch 13 mit einem derartigen Werkzeugmagazin.

Das erfindungsgemäße Werkzeugmagazin für eine Werkzeugmaschine weist auf: Eine Gelenkkette aus einer Mehrzahl von miteinander verbundenen, gleich geformten Kettengliedern zum Werkzeugtransport, wobei eine Grundfläche jedes Kettenglieds durch vier Seiten begrenzt ist, einen Kettenantrieb zur Umlaufbewegung der Gelenkkette, einen Werkzeugköcher, der mit einem ersten Kettenglied der Mehrzahl von Kettengliedern an einer dritten Seite der vier Seiten des ersten Kettenglieds verbunden ist, wobei der Werkzeugköcher einen Werkzeugaufnahmeabschnitt zur Aufnahme eines Werkzeugs aufweist und wobei bei aufgenommenem Werkzeug das Werkzeug im Werkzeugköcher eine Werkzeugachse definiert, und eine Schwenkvorrichtung zum Verschwenken des Werkzeugköchers relativ zum ersten Kettenglied von einer Transportposition in eine Wechselposition, wobei in der Transportposition der Werkzeugköcher eine Strecke von einer ersten Position an einer vierten, der dritten Seite gegenüberliegenden Seite der vier Seiten des ersten Kettenglieds bis zu einer zweiten Position an der dritten Seite des ersten Kettenglieds um eine Länge des Werkzeugköchers in Richtung der Werkzeugachse verlängert.

Das Kettenglied hat drei Hauptträgheitsachsen, von denen jede die Normale zu einer von drei Querschnittsflächen des Kettenglieds ist. Die Grundfläche des Kettenglieds ist diejenige Querschnittsfläche der drei Querschnittsflächen, die von den drei Querschnittsflächen den größten Flächeninhalt hat.

Somit ist beim erfindungsgemäßen Werkzeugmagazin der Köcher in der Transportposition in einer Richtung senkrecht zu der Richtung orientiert, in der die Kettenglieder aneinandergereiht sind. Damit hat ein aus wenigen Kettengliedern und daran befestigten Köchern bestehender Ausschnitt der Kette eine im Wesentlichen flache bzw. ebene Gestalt, so dass eine Biegung der Kette in zwei entgegengesetzte Richtungen (Gegenbiegung) auch dann noch möglich ist, wenn Werkzeugköcher an mehreren benachbarten Kettengliedern befestigt sind. Außerdem ist es mit dem erfindungsgemäßen Werkzeugmagazin möglich, die Kette lokal stark zu biegen, das heißt, mehrere benachbarte Kettenglieder an den jeweiligen Gelenken stark gegeneinander zu verdrehen, so dass das Werkzeugmagazin noch kompakter gebaut werden kann.

Vorzugsweise grenzt der Werkzeugköcher sowohl in der Transportposition als auch in der Wechselposition nur an die dritte Seite der vier Seiten des ersten Kettenglieds an.

Zusammen mit dem ersten Kettenglied stellt der Werkzeugköcher somit in der Transportposition im Wesentlichen ein Längselement dar und in der Wechselposition ein im Wesentlichen L-förmiges Element. Die Regionen sowohl vom ersten Kettenglied als auch vom Werkzeugköcher, die aufgrund der Verbindung zwischen Kettenglied und Köcher miteinander in Kontakt stehen bzw. eng benachbart sind, sind in jeder Position des Köchers kleine Regionen im Verhältnis zur Größe des Köchers bzw. des Kettenglieds. Dadurch wird eine große Beweglichkeit sowohl von benachbarten Kettengliedern also auch zwischen Köchern und Kettengliedern gewährleistet, ohne dass sich die einzelnen Teile bei der Drehung der Teile gegeneinander im Weg stehen, so dass die Kette mitsamt Köchern auf engen Kurven im Werkzeugmagazin umlaufen kann.

Vorzugsweise definieren die Kettenglieder eine Transportebene und sind so in der Gelenkkette positioniert, dass für jedes Kettenglied die Grundfläche des Kettenglieds senkrecht zur Transportebene ist.

Die Kettenglieder sind somit liegend in der Kette angeordnet, anstatt in der Kette aufrecht zu stehen. Dadurch kann ein Kettenglied so mit seinen benachbarten Kettengliedern verbunden werden, dass sowohl bei Vorwärtsumlauf der Kette als auch bei Rückwärtsumlauf auch in den Kurven der im Werkzeugmagazin gelagerten Kette ein Kettenglied einen gleichmäßigen Zug erfährt, was die Stabilität der Anordnung bei großen Zusatzgewichten durch eine große Anzahl von Werkzeugen im Magazin und bei hohen Umlaufgeschwindigkeiten erhöht.

Vorzugsweise ändert sich die Krümmungsrichtung der Gelenkkette.

Dies hat den Vorteil, dass eine Kette mit Gegenbiegung im Werkzeugmagazin bereitgestellt werden kann. Die von der Kette umgebene Fläche kann demnach O-förmig, aber auch beispielsweise im Wesentlichen C-förmig sein. Ein Werkzeugmagazin mit C-förmiger Kette kann ungefähr doppelt so viele Werkzeuge fassen wie ein gleich großes Magazin mit O-förmiger Kette.

Erfindungsgemäß weist das erste Kettenglied eine erste durchgängige Offnung von einer dritten Position an der dritten Seite zu einer vierten Position an der vierten Seite auf und weist der Werkzeugköcher eine zweite durchgängige Öffnung in Richtung der Werkzeugachse auf, wobei in der Transportposition die erste durchgängige Öffnung und die zweite durchgängige Öffnung aneinandergrenzen und eine durchgängige Öffnung durch das erste Kettenglied und den Werkzeugköcher bilden.

Durch die zweite durchgängige Öffnung im Werkzeugköcher ist das dem Kettenglied zugewandte Ende des Köchers als Röhre ausgebildet. Dies hat den Vorteil, dass das Innere des Werkzeugköchers durch das Kettenglied hindurch von einer Seite des Kettenglieds, die dem Köcher abgewandt ist, zugänglich ist. Dadurch kann beispielsweise das Werkzeug durch Einschieben eines stabförmigen Elements, zum Beispiel eines Zylinders, in den röhrenförmigen Köcher aus dem Köcher ausgeworfen werden oder ein stabförmiges Element kann durch Kettenglied und Köcher gesteckt werden, so dass der Köcher in der Transportposition fixiert wird. In der Wechselposition ist das Innere des Werkzeugköchers von oben zugänglich.

Vorzugsweise ist die Gelenkkette wälzgelagert.

Die Wälzlagerung der Kette bietet den Vorteil einer geringen Reibung bei der Umlaufbewegung der Kette, was wiederum bei einer hohen Magazinkapazität und entsprechend hohem Gewicht von Kette und Köchern von Vorteil ist, weil die benötigte Antriebsleistung zur Umlaufbewegung niedriger ist als zum Beispiel bei Gleitlagerung.

Vorzugsweise weist der Werkzeugköcher einen Wälzlageraufnahmeabschnitt zur Aufnahme eines dritten Wälzlagers auf.

Durch ein Wälzlager am Köcher kann das Kippmoment durch das Werkzeuggewicht in der Transportstellung gut gehalten werden. Dabei ist es vorteilhaft, wenn das dritte Wälzlager am Köcher in der Transportstellung im Wesentlichen parallel zu den beiden Wälzlagern an der Ober- bzw. Unterseite des Kettenglieds (zweites und viertes Wälzlager) ausgerichtet ist. Die Wälzlagerachse des dritten Wälzlagers kann aber auch in der Transportstellung einen Winkel von bis zu 45° mit der Achse, die durch das zweite und vierte Wälzlager definiert wird, einnehmen.

Vorzugsweise weist der Werkzeugköcher einen Werkzeugverriegelungsabschnitt zur Verriegelung und Entriegelung des Werkzeugs auf.

Der Werkzeugverriegelungsabschnitt kann als Verriegelungsröhre oder -bohrung ausgebildet sein und dient zur Aufnahme von Verriegelungselementen wie Federn und Kugeln zur Verriegelung des Werkzeugs. Weiterhin kann der Werkzeugköcher eine oder mehrere dieser Röhrengruppen aufweisen, so dass die Federn und Kugeln zur Verriegelung so montiert werden können, dass verschiedene Werkzeugtypen im Werkzeugköcher gehalten werden können, zum Beispiel SK-, CAT- oder BT-Werkzeuge.

Vorzugsweise weist das Werkzeugmagazin weiterhin einen Anschlagabschnitt zum Ausrichten des Werkzeugköchers in der Wechselposition auf.

Mit Hilfe des Anschlagabschnitts kann der Werkzeugköcher genau in der Wechselposition ausgerichtet werden, so dass das Werkzeug schnell von einem Greifer gegriffen und zum Werkzeugwechsel in den Arbeitsraum der Werkzeugmaschine gebracht werden kann. Außerdem kann bei korrekter Ausrichtung des Werkzeugköchers das zuletzt benutzte Werkzeug schnell zurück in den Köcher gesetzt werden.

Vorzugsweise weist dabei der Anschlagabschnitt einen Anschluss zum Anschließen einer Reinigungsvorrichtung zum Reinigen des Werkzeugköchers auf, wobei eine zweite Öffnung des Werkzeugköchers in der Wechselposition mit dem Anschlagabschnitt in Kontakt ist.

Dies hat den Vorteil, dass der Anschlagabschnitt doppelt genutzt werden kann, einmal zum genaueren Ausrichten des Köchers und zusätzlich, um den Köcher in der Wechselposition zu reinigen. Dadurch wird der Gesamtaufbau der Werkzeugmaschine weiter verkleinert.

Vorzugsweise weist das erfindungsgemäße Werkzeugmagazin eine Gelenkkette aus erfindungsgemäßen Kettengliedern auf, wobei in der Transportposition die Werkzeugachse in der ersten Ebene des ersten Kettenglieds liegt.

Dadurch liegen der Köcher und das erste Kettenglied in der Transportposition im Wesentlichen auf gleicher Höhe, was eine Gegenbiegung der Kette und somit ein kompakteres Werkzeugmagazin ermöglicht.

Dabei weist der Köcher vorzugsweise einen Angriffsabschnitt zum Angreifen der Schwenkvorrichtung auf, wobei der Angriffsabschnitt als Längselement ausgebildet ist, dessen Längsachse parallel zur dritten Drehachse des ersten Kettenglieds ist.

Bei dieser Form und Lage des Schwenkvorrichtungs-Angriffsabschnitts am Köcher kann die Hebemechanik für den Werkzeugköcher, die den Werkzeugköcher von der Wechselposition zurück in die Transportposition bringt, auf die maschinenabgewandte Seite des Werkzeugmagazins verlagert werden, wo sie gut zugänglich ist. Zudem reichen in diesem Fall kurze Greiferarme zum Verschwenken des Köchers zwischen der Wechselposition und der Transportposition aus.

Das erfindungsgemäße Kettenglied für eine Gelenkkette weist auf: Eine Grundfläche, die durch vier Seiten begrenzt ist, einen ersten Gelenkabschnitt entlang einer ersten Seite der vier Seiten zur Aufnahme eines ersten Verbindungselements zur Verbindung des Kettenglieds mit einem ersten benachbarten Kettenglied, wobei der erste Gelenkabschnitt eine erste Drehachse einer Drehbewegung des ersten benachbarten Kettenglieds relativ zum Kettenglied definiert, einen zweiten Gelenkabschnitt entlang einer zweiten, zur ersten Seite parallelen Seite der vier Seiten zur Aufnahme eines zweiten Verbindungselements zur Verbindung des Kettenglieds mit einem zweiten benachbarten Kettenglied, wobei der zweite Gelenkabschnitt eine zweite Drehachse einer Drehbewegung des zweiten benachbarten Kettenglieds relativ zum Kettenglied definiert, und einen dritten Gelenkabschnitt an einer dritten Seite der vier Seiten zur Aufnahme eines dritten Verbindungselements zur Verbindung des Kettenglieds mit einem Werkzeugköcher, wobei der dritte Gelenkabschnitt eine dritte Drehachse einer Drehbewegung des Werkzeugköchers relativ zum Kettenglied definiert, wobei die erste Drehachse und die zweite Drehachse eine erste Ebene definieren, wobei die erste Ebene parallel zur Grundfläche des Kettenglieds ist, und die dritte Drehachse außerhalb der ersten Ebene liegt.

Das Kettenglied hat drei Hauptträgheitsachsen, von denen jede die Normale zu einer von drei Querschnittsflächen des Kettenglieds ist. Die Grundfläche des Kettenglieds ist diejenige Querschnittsfläche der drei Querschnittsflächen, die von den drei Querschnittsflächen den größten Flächeninhalt hat. Das Kettenglied ist somit im Wesentlichen flächig ausgebildet, wobei sowohl die Länge als auch die Breite des Kettenglieds wesentlich größer ist als die Höhe des Kettenglieds. Die Grundfläche des Kettenglieds wird also durch die Länge und die Breite des Kettenglieds definiert, nicht aber durch die Höhe des Kettenglieds.

Ein derartiges Kettenglied ist aufgrund seiner flachen Form, die zudem nicht massiv sein muss, sondern auch durchbrochen sein kann, kompakt, leicht und trotzdem stabil. Es kann sehr einfach an zwei gegenüberliegenden Seiten (an der ersten Seite und an der zweiten Seite des Kettenglieds) mit jeweils einem weiteren Kettenglied über die jeweiligen Gelenkabschnitte verbunden werden, so dass aus vielen Kettengliedern eine Gelenkkette gebildet wird. Dabei können zwei miteineinander verbundene Gelenkabschnitte beispielsweise als ein Scharniergelenk ausgebildet sein, wobei das Verbindungselement ein einfacher Bolzen sein kann, der durch die beiden Gelenkabschnitte gesteckt wird und sie so miteinander verbindet.

Das erfindungsgemäße Kettenglied liegt somit flach in der Kette. In anderen Worten, die Grundfläche eines jeden Kettenglieds der Kette ist senkrecht zur von der Kette umschlossenen Fläche. Bei einer solchen Orientierung der Kettenglieder in der Kette und einer solchen Verbindung der Kettenglieder untereinander wird ein gleichmäßiger Zug auf die Kettenglieder und eine hohe Zugfestigkeit der Kette erreicht, so dass auch eine lange Kette mit vielen Kettengliedern und vielen daran befestigten Werkzeugköchern und Werkzeugen schnell umlaufen kann.

Des Weiteren liegt das Köchergelenk an der dritten Seite des Kettenglieds nicht in der Ebene, die durch die beiden Gelenke an der ersten und zweiten Seite des Kettenglieds definiert wird, die das Kettenglied mit den beiden benachbarten Kettengliedern verbinden. Dadurch kann der Werkzeugköcher so am Kettenglied befestigt werden, dass er zwischen zwei Positionen bezüglich des Kettenglieds verschwenkt werden kann, das Werkzeugkippmoment gut abgestützt wird und in jeder Position leicht auf den Köcher und auf dessen Verschwenkangriffspunkt und Verriegelungsrasten sowie auf das Werkzeug im Köcher zugegriffen werden kann. In der ersten Position (Transportposition) ist die Längsachse des Werkzeugköchers im Wesentlichen parallel zur Grundfläche des Kettenglieds ausgerichtet. Ein Werkzeugköcher in Transportposition ist somit im Wesentlichen parallel zum Boden orientiert, auf dem das Werkzeugmagazin mit der Kette aus erfindungsgemäßen Kettengliedern steht. In dieser Position befinden sich alle Werkzeugköcher, die an der Kette befestigt sind, wenn die Kette in Umlaufbewegung versetzt wird. Befindet sich der Werkzeugköcher mit dem gewünschten Werkzeug an einer Position in der Kette, an der das Werkzeug aus dem Magazin entnommen werden kann, wird der Köcher von der Transportposition um 90° in die Wechselposition verschwenkt. In der Wechselposition ist der Köcher im Wesentlichen senkrecht zum Boden orientiert. Somit befinden sich zu jedem Zeitpunkt alle Köcher des Werkzeugmagazins neben dem jeweiligen Kettenglied, an dem sie befestigt sind bzw. auch immer neben der Kette, unabhängig davon, ob sie sich in Transportposition oder in Wechselposition befinden. Dadurch ist es möglich, die Kette so im Werkzeugmagazin zu lagern, dass sie Biegungen aufweist, die in unterschiedliche Richtungen gekrümmt sind (Gegenbiegung der Kette). Das heißt, während eines gesamten Kettenumlaufs ändert sich der Winkel, der von den Grundflächen zweier benachbarter Kettenglieder gebildet wird, wobei sowohl Winkel kleiner als 180° als auch Winkel größer als 180° erreicht werden. Dadurch wird eine bessere Raumausnutzung für die Werkzeuglagerung im Magazin erreicht, weil mehrere Windungen der Kette übereinander geführt werden können, anders als beispielsweise bei einem kreisförmigen oder ellipsenförmigen Umlauf. Ermöglicht wird dies dadurch, dass die Werkzeugköcher die Gegenbiegung der Kette nicht behindern können, da sich ein Werkzeugköcher immer neben dem Kettenglied befindet, an dem er befestigt ist und nicht etwa über oder unter dem Kettenglied. Auf diese Weise kann das Magazin sehr kompakt gehalten werden.

Vorzugsweise ist das Kettenglied trapezförmig, wobei die erste Seite die kürzeste Seite des Trapezes ist.

Das Kettenglied kann somit eine Dreiecksform mit abgeschnittener Spitze haben. Ein solches Kettenglied zeichnet sich aufgrund seiner Form und der durchgängigen Verbindung zwischen den Gelenken zur Verbindung mit benachbarten Kettengliedern durch hohe Festigkeit, geringe Federung bei der Umlaufbewegung des Kettenglieds und bei der Verschwenkbewegung des Köchers und durch hohe Tragfähigkeit aus.

Vorzugsweise weist das Kettenglied weiterhin eine erste durchgängige Öffnung von einer ersten Position an der dritten Seite zu einer zweiten Position an der vierten Seite auf.

Ein solcher Mittendurchgang durch das Kettenglied ermöglicht den Zugriff auf den Köcher und auf das im Köcher befindliche Werkzeug durch das Kettenglied hindurch, so dass der Köcher in Transportposition fixiert und das Werkzeug leicht verriegelt und entriegelt werden kann.

Vorzugsweise besteht der zweite Gelenkabschnitt aus einem ersten Gelenkabschnittsteil und einem zweiten Gelenkabschnittsteil. Weiterhin vorzugsweise entspricht dabei ein Abstand zwischen dem ersten Gelenkabschnittsteil und dem zweiten Gelenkabschnittsteil der Größe des ersten Gelenkabschnitts.

Dies hat den Vorteil, dass zwei Kettenglieder einfach und stabil miteinander verbunden werden können, indem der erste Gelenkabschnitt des ersten Kettenglieds in den zweiten Gelenkabschnitt des zweiten Kettenglieds gesteckt wird und anschließend ein Bolzen durch die als Gelenkhülsen ausgebildeten Gelenkabschnitte gesteckt wird.

Vorzugsweise ist das Kettenglied einteilig und vorzugsweise besteht das Kettenglied aus Kunststoff oder Metall.

Ein einteiliges Kettenglied hat den Vorteil, dass dessen Herstellung schnell, einfach und kostengünstig ist, da es beispielsweise als Spritzgussteil durch Abformung hergestellt werden kann. Zudem ist zur Verbindung der Kettenglieder keine weitere mechanische Bearbeitung, zum Beispiel spanende Nachbearbeitung, mehr nötig.

Vorzugsweise weist das Kettenglied weiterhin einen ersten Wälzlageraufnahmeabschnitt am zweiten Gelenkabschnitt zur Aufnahme eines ersten Wälzlagers, einen zweiten Wälzlageraufnahmeabschnitt zur Aufnahme eines zweiten Wälzlagers und einen dritten Wälzlageraufnahmeabschnitt zur Aufnahme eines dritten Wälzlagers auf, wobei der zweite Wälzlageraufnahmeabschnitt und der dritte Wälzlageraufnahmeabschnitt eine Achse definieren, die senkrecht zur Grundfläche des Kettenglieds ist und wobei der zweite Wälzlageraufnahmeabschnitt und der dritte Wälzlageraufnahmeabschnitt auf gegenüberliegenden Seiten der Grundfläche des Kettenglieds ausgebildet sind.

Die Wälzlagerung der Kette bietet den Vorteil einer geringen Reibung bei der Umlaufbewegung der Kette, was wiederum bei einer hohen Magazinkapazität und entsprechend hohem Gewicht von Kette und Köchern von Vorteil ist. Die benötigte Antriebsleistung ist bei Wälzlagerung niedriger als zum Beispiel bei Gleitlagerung. Über die Wälzlagerung hinten am Kettenglied sowie oben und unten am Kettenglied wird eine stabile Lagerung und gute Abstützung jedes einzelnen Kettenglieds erreicht, vor allem, wenn das Kettenglied im Magazin um eine Kurve läuft. Zudem ist der erste und zweite Wälzlageraufnahmeabschnitt so am Kettenglied ausgebildet, dass das erste und das zweite Wälzlager senkrecht zueinander am Kettenglied angebracht werden können, wodurch auch aufeinander senkrecht stehende Kräfte aufgenommen werden können. Das zweite und das dritte Wälzlager oben und unten am Kettenglied nehmen gemeinsam die Gewichtskraft des Werkzeugs auf, die über das Gelenk zwischen Köcher und Kettenglied als Kippmoment auf das Kettenglied übertragen wird.

Weiterhin wird eine Werkzeugmaschine mit einem erfindungsgemäßen Werkzeugmagazin und der Reinigungsvorrichtung zum Reinigen des Werkzeugköchers bereitgestellt.

### KURZBESCHREIBUNG DER FIGUREN

- **Fig. 1**: zeigt ein Ausführungsbeispiel mit mehreren Kettengliedern und Werkzeugköchern in Explosionsdarstellung.
- **Fig. 2**: zeigt ein Ausführungsbeispiel mit mehreren verbundenen Kettengliedern und Werkzeugköchern in Transportposition.
- **Fig. 3**: zeigt ein Ausführungsbeispiel eines Kettenglieds mit Werkzeugköcher in Transportposition in Seitenansicht.
- **Fig. 4**: zeigt ein Ausführungsbeispiel eines Kettenglieds mit Werkzeugköcher in Transportposition von schräg oben.
- **Fig. 5**: zeigt ein Ausführungsbeispiel mit mehreren verbundenen Kettengliedern und Werkzeugköchern in Transportposition und Wechselposition.
- **Fig. 6A**: zeigt ein Ausführungsbeispiel eines erfindungsgemäßen Werkzeugmagazins mit einem Werkzeugköcher in Transportposition.
- **Fig. 6B**: zeigt ein Ausführungsbeispiel eines erfindungsgemäßen Werkzeugmagazins mit einem Werkzeugköcher in Wechselposition.
- **Fig. 7**: zeigt ein Ausführungsbeispiel eines erfindungsgemäßen Werkzeugmagazins mit einem Werkzeugköcher in Wechselposition in vergrößerter Ansicht.
- **Fig. 8**: zeigt ein Ausführungsbeispiel einer Werkzeugmaschine mit einem erfindungsgemäßen Werkzeugmagazin.

### DETAILLIERTE BESCHREIBUNG DER FIGUREN UND BEVORZUGTER AUSFÜHRUNGSBEISPIELE DER VORLIEGENDEN ERFINDUNG

Im Folgenden wird die vorliegende Erfindung detailliert anhand von Ausführungsbeispielen und der beispielhaften Figuren beschrieben und erläutert.

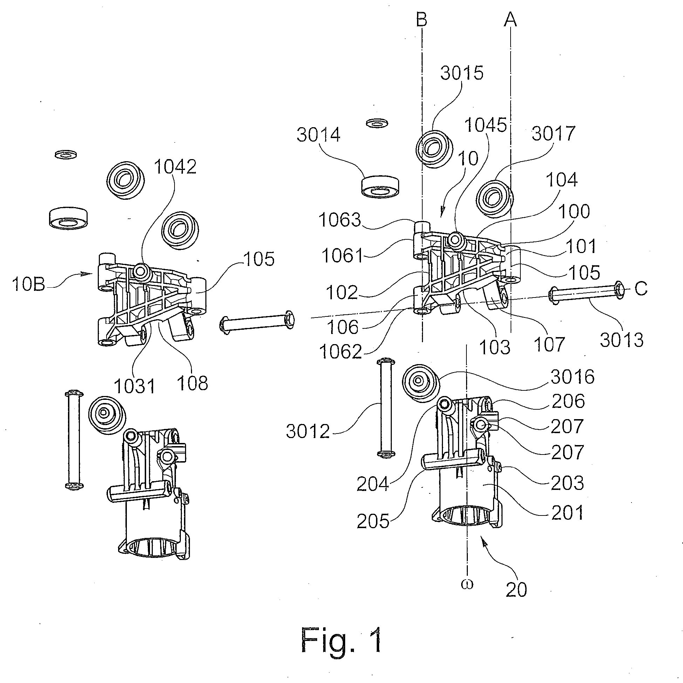

Fig. 1 zeigt ein Ausführungsbeispiel eines Kettenglieds 10 und seine relative Anordnung bezüglich eines benachbarten Kettenglieds 10B sowie zweier Werkzeugköcher 20 ohne Werkzeug. Gezeigt sind weiterhin das als Bolzen ausgebildete Verbindungselement 3012 zur Verbindung der Kettenglieder 10 und 10B, das als Bolzen ausgebildete Verbindungselement 3013 zur Verbindung des Kettenglieds 10 mit einem Köcher 20, sowie die Wälzlager 3014 - 3016 für die Lagerung der Kettenglieder 10, 10B und der Köcher 20.

Das Kettenglied 10 ist flächig ausgebildet, wobei seine Grundfläche 100 die Form eines Trapezes bzw. eines Dreiecks mit abgeschnittener Spitze hat. Die Grundfläche 100 ist durch vier Seiten 101 - 104 begrenzt, wobei die erste Seite 101 die kürzeste Seite des Trapezes ist und parallel zur zweiten Seite 102 ist. An der ersten und zweiten Seite 101, 102 befindet sich jeweils ein erster und ein zweiter Gelenkabschnitt 105, 106 zur Verbindung mit einem ersten benachbarten Kettenglied 10A (nicht gezeigt) an der ersten Seite 101 und zur Verbindung mit einem zweiten benachbarten Kettenglied 10B an der zweiten Seite 102. Die Gelenkabschnitte 105, 106 sind als Gelenkhülsen eines Scharniergelenks ausgebildet, so dass Verbindungsbolzen 3011 (nicht gezeigt), 3012 durch die Gelenkhülsen gesteckt werden können. Der zweite Gelenkabschnitt 106 an der zweiten Seite 102 besteht dabei aus zwei räumlich getrennten Abschnitten, einem ersten Gelenkabschnittsteil 1061 an einem Ende der zweiten Seite 102, das gleichzeitig auch das Ende einer vierten Seite 104 der Grundfläche 100 ist, und einem zweiten Gelenkabschnittsteil 1062 an dem anderen Ende der zweiten Seite 102, das gleichzeitig auch das Ende einer dritten Seite 103 der Grundfläche 100 ist. Der erste und der zweite Gelenkabschnittsteil 1061, 1062 sind dabei jeweils als eine Gelenkhülse ausgebildet, wobei der Abstand zwischen den Gelenkhülsen 1061, 1062 so bemessen ist, dass die Gelenkhülse 105 eines benachbarten Kettenglieds 10B zwischen die Gelenkhülsen 1061, 1062 passt. Zur Verbindung der Kettenglieder 10, 10B wird dann ein Bolzen 3012 durch die Gelenkhülsen 1061, 105, 1062 der Kettenglieder 10 bzw. 10B gesteckt und so ein Scharniergelenk gebildet. Der erste Gelenkabschnitt 105 an der ersten Seite 101 definiert eine erste Drehachse A, um die das Kettenglied 10A (nicht gezeigt) relativ zum Kettenglied 10 drehbar ist und der zweite Gelenkabschnitt 106 an der zweiten Seite 102 definiert eine zweite Drehachse B, um die das Kettenglied 10B relativ zum Kettenglied 10 drehbar ist. Die Drehachsen A, B sind parallel und liegen bezüglich der Grundfläche 100 des Kettenglieds 10 auf gleicher Höhe.

Weiterhin weist der erste Gelenkabschnittsteil 1061 des zweiten Gelenkabschnitts 106 einen ersten Wälzlageraufnahmeabschnitt 1063 auf, so dass ein Wälzlager 3014 auf den ersten Gelenkabschnittsteil 1061 gesteckt werden kann. Alternativ kann das Wälzlager 3014 auch auf den Verbindungsbolzen 3012 gesteckt werden. An der vierten Seite 104 befindet sich ungefähr in der Mitte der Seite 104 ein zweiter Wälzlageraufnahmeabschnitt 1045, so dass ein Wälzlager 3015 an der Oberseite des Kettenglieds 10 auf den zweiten Wälzlageraufnahmeabschnitt 1045 aufgesteckt werden kann. Weiterhin kann ein Wälzlager 3017 an der Unterseite des Kettenglieds 10 auf einen dritten Wälzlageraufnahmeabschnitt 1046, der dem Wälzlageraufnahmeabschnitt 1045 gegenüberliegt, aufgesteckt werden. Die aufgesteckten Wälzlager 3015, 3017 sind senkrecht zum Wälzlager 3014 orientiert, so dass die Wälzlagerung auch Kräfte, die senkrecht zueinander sind, aufnehmen kann. Beide Wälzlager 3015 und 3017 werden benötigt, da sie gemeinsam die Gewichtskraft des Werkzeugs 40 aufnehmen, die über das Köcher-Kettenglied-Gelenk 107, 206 als Kippmoment auf das Kettenglied 10 übertragen wird. Dazu sind die Wälzlageraufnahmeabschnitte 1045, 1046 für die Wälzlager 3015, 3017 zweckmäßigerweise jeweils als Achsstummel ausgebildet, die bezüglich der Grundfläche 100 des Kettenglieds 10 nach oben und unten weisen und somit eine Achse definieren, die senkrecht zur Grundfläche 100 des Kettenglieds 10 ist. Die Wälzlageraufnahmeabschnitte 1045, 1046 müssen dabei nicht an der vierten Seite 104 des Kettenglieds 10 ausgebildet sein, sondern können auch in das Innere des Kettenglieds 10 versetzt sein.

Der Kettengliedkörper kann aus Kunststoff oder Metall bestehen und ist einteilig ausgebildet. Der Kettengliedkörper besteht aus mehreren Streben, die die jeweils gegenüberliegenden Seiten 101, 102 und 103, 104 des Kettenglieds 10 in der Ebene der Gelenkabschnitte 105 und 106 durchgängig miteinander verbinden. Dabei sind die Streben, die die Seiten 103 und 104 verbinden, parallel zueinander und zu den Seiten 101, 102 und die Streben, die die Seiten 101 und 102 verbinden, parallel zu einer der Seiten 103, 104. Dabei weist der Kettengliedkörper mehrere Öffnungen auf, die von oben nach unten durch die Grundfläche 100 hindurch reichen. Dadurch ist das Kettenglied 10 einfach und kostengünstig durch Abformung herzustellen, sehr leicht und sehr stabil.

An der dritten Seite 103 der Grundfläche 100 befindet sich ein dritter Gelenkabschnitt 107, der ebenfalls aus zwei Teilen an den jeweiligen Enden der dritten Seite 103 besteht, wobei beide Teile des dritten Gelenkabschnitts 107 als Gelenkhülsen ausgebildet sind. Der Abstand zwischen den beiden Teilen ist so bemessen, dass der Gelenkabschnitt 206 des Werkzeugköchers 20 zwischen beide Teile passt, so dass der Gelenkabschnitt 107 des Kettenglieds 10 und der Gelenkabschnitt 206 des Köchers 20 mit Hilfe eines Bolzens 3013 zu einem Scharniergelenk verbunden werden können. Der Gelenkabschnitt 107 des Kettenglieds 10 definiert also eine dritte Drehachse C, um die der Werkzeugköcher 20 relativ zum Kettenglied 10 drehbar ist. Die Drehachse C ist in Wesentlichen senkrecht zu den Drehachsen A und B orientiert. Da die Drehachse C bezüglich der Grundfläche 100 tiefer liegt als die Drehachsen A und B, schneidet die Drehachse C die Drehachsen A und B jedoch nicht.

Der Köcher 20 zur Verbindung mit dem Kettenglied 10 weist außer dem Gelenkabschnitt 206 noch einen Werkzeugaufnahmeabschnitt 201 auf, der so geformt ist, dass er einen Werkzeugkegel eines Werkzeugs 40 (nicht gezeigt) aufnehmen kann. Das aufgenommene Werkzeug 40 ragt dann aus einem Ende des Köchers 20 heraus, das dem Ende des Köchers 20, an dem sich der Gelenkabschnitt 206 befindet, gegenüberliegt. Die Längsachse des aufgenommenen Werkzeugs 40 definiert eine Werkzeugachse W im Köcher 20. Der Werkzeugköcher 20 hat an seiner Außenseite mehrere Verriegelungsröhren bzw. -bohrungen 207, die die Federn und Kugeln für die Verriegelung des Werkzeugs 40 im Werkzeugköcher 20 aufnehmen. Außerdem weist der Köcher 20 an seiner Außenseite einen Wälzlageraufnahmeabschnitt 204 auf, auf den ein Wälzlager 3016 aufgesteckt werden kann. Der Wälzlageraufnahmeabschnitt 204 ist als Achsstummel ausgebildet. Das Wälzlager 3016 dient zum Halten des Kippmoments des Köchers 20 in der Transportstellung. Auf der Außenseite des Köchers 20 etwa in der Mitte zwischen den beiden Köcherenden befindet sich weiterhin ein Angriffsabschnitt 205 zum Angreifen der Schwenkvorrichtung 303 (nicht gezeigt), die den Köcher 20 relativ zum Kettenglied 10 um die Drehachse C verschwenkt. Außerdem weist der Köcher 20 zusätzliche Öffnungen 203 auf, mit Hilfe derer der Innenraum des Köchers mit Druckluft ausgeblasen und von Schmutzpartikeln gereinigt werden kann.

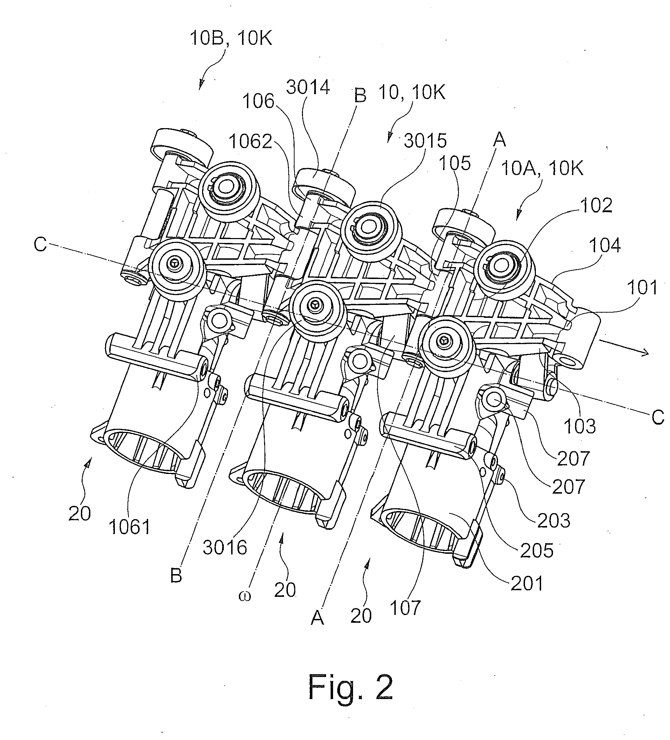

Fig. 2 zeigt drei miteinander verbundene Kettenglieder 10, 10A, 10B, wobei an jedem Kettenglied 10, 10A, 10B je ein Werkzeugköcher 20 befestigt ist. Die Kettenglieder 10, 10A, 10B bilden somit einen Ausschnitt einer Gelenkkette 301. Das mittlere Kettenglied 10 ist über ein Scharniergelenk, das aus dem ersten Gelenkabschnitt 105 des mittleren Kettenglieds 10, dem zweiten Gelenkabschnitt 106 des rechten Kettenglieds 10A und dem Bolzen 3011 besteht, mit dem rechten Kettenglied 10A drehbar verbunden. Die erste Drehachse A verläuft entlang dieses Scharniergelenks, wobei das Kettenglied 10A relativ zum Kettenglied 10 um die Drehachse A um einen großen Winkel nach oben und nach unten gedreht werden kann, ohne dass die beiden Werkzeugköcher 20 der Kettenglieder 10, 10A zusammenstoßen. Dies ist Voraussetzung für die Gegenbiegung der Gelenkkette 301, die aus erfindungsgemäßen Kettengliedern 10 zusammengesetzt ist.

Weiterhin ist das mittlere Kettenglied 10 über ein weiteres Scharniergelenk, das aus dem zweiten Gelenkabschnitt 106 des Kettenglieds 10, dem ersten Gelenkabschnitt 105 des linken Kettenglieds 10B und dem Bolzen 3012 besteht, mit dem linken Kettenglied 10B drehbar verbunden. Die zweite Drehachse B verläuft entlang dieses weiteren Scharniergelenks, wobei das Kettenglied 10B relativ zum Kettenglied 10 um die Drehachse B um einen großen Winkel nach oben und nach unten gedreht werden kann, ohne dass die beiden Werkzeugköcher 20 der Kettenglieder 10, 10B zusammenstoßen.

In Fig. 2 ist jedes Kettenglied 10, 10A, 10B mit je einem Werkzeugköcher 20 über ein Scharniergelenk verbunden. Alle gezeigten Köcher 20 sind in Transportposition, das heißt, die Werkzeugachse W jedes Köchers 20 ist parallel zu den Drehachsen A, B. Somit verlängert der Köcher 20 in der Transportposition eine gedachte Linie von einer ersten Position 1041 an der vierten Seite 104 des Kettenglieds 10, die sich in etwa in der Mitte der vierten Seite 104 befindet, zu einer zweiten Position 1032 an der dritten Seite 103 des Kettenglieds 10, die sich in etwa in der Mitte der dritten Seite 103 befindet, über die zweite Position 1032 an der dritten Seite 103 hinaus. Die Werkzeugachse W hat zur Drehachse A in etwa den gleichen Abstand wie zur Drehachse B und befindet sich bezüglich der Grundfläche 100 des Kettenglieds 10 auf der gleichen Höhe wie die Drehachsen A, B. Damit hat nicht nur das einzelne Kettenglied 10 flächige Gestalt, sondern auch ein Ausschnitt aus der Gelenkkette 301, der aus mehreren Kettengliedern 10, zum Beispiel drei Kettengliedern 10, und an den Kettengliedern 10 befestigten Köchern 20 besteht, wenn sich die Köcher 20 in Transportposition befinden. Somit kann ein Kettenabschnitt aus mehreren Kettengliedern 10 samt Köchern 20 nach oben und unten gebogen werden. Bei einer Umlaufbewegung der Gelenkkette 301, die in ein Werkzeugmagazin 30 einer Werkzeugmaschine eingebaut ist, können so Kurven, die in entgegengesetzte Richtungen gekrümmt sind, durchlaufen werden, das heißt, die Kettenumlaufbahn muss nicht O-förmig sein, sondern kann auch mehrere Windungen enthalten. Zudem zeichnet sich diese Kettenkonstruktion bei einer Umlaufbewegung der Kette 301, die einem Zug in Richtung des Pfeils in Fig. 2 entspricht, und bei einer Umlaufbewegung in der entgegengesetzten Richtung durch hohe Zugfestigkeit und hohe Tragfähigkeit aus, was eine Voraussetzung dafür ist, dass das Werkzeugmagazin eine große Anzahl an Werkzeugen aufnehmen kann.

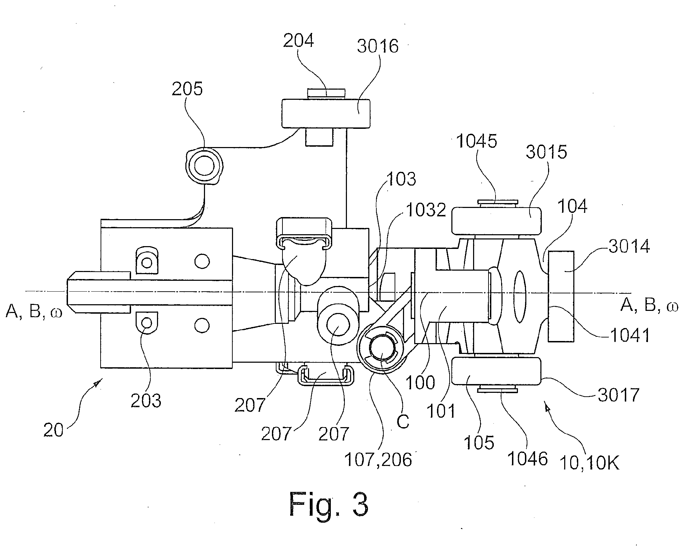

Fig. 3 zeigt eine Seitenansicht eines Kettenglieds 10 und eines damit verbundenen Werkzeugköchers 20 in Transportposition. Die Drehachsen A, B und die Werkzeugachse W befinden sich bezüglich der Grundfläche 100 des Kettenglieds 10 auf gleicher Höhe. Die Drehachse C verläuft senkrecht zu den Achsen A, B und W und liegt in dieser Ansicht unterhalb der Achsen A, B, W und unterhalb der Grundfläche 100, da der dritte Gelenkabschnitt 107 des Kettenglieds 10 und der damit verbundene Gelenkabschnitt 206 des Köchers 20 an der Unterseite des Kettenglieds 10 bzw. an der Unterseite des Köchers 20 ausgebildet sind. Dadurch kann der Köcher 20 von der gezeigten Transportposition um 90° nach unten in die Wechselposition verschwenkt werden.

Als Angriffspunkt für die Schwenkvorrichtung 303 (nicht gezeigt), die den Köcher 20 von der Transportposition in die Wechselposition und zurück verschwenkt, ist am Köcher 20 der röhrenförmige Angriffsabschnitt 205 ausgebildet, dessen Achse parallel zur Köcher-Schwenkachse C ist. Der Angriffsabschnitt 205 am Köcher 20 kann auch dazu dienen, den Köcher 20 in einer bestimmten Position bezüglich des Kettenglieds 10 zu halten. In der gezeigten Ansicht befindet sich der Angriffsabschnitt 205 oberhalb der Achsen A, B, W und oberhalb der Grundfläche 100 auf der vom Kettenglied 10 abgewandten Seite des Köchers 20. Somit ist der Angriffsabschnitt 205 für die Schwenkvorrichtung 303 leicht zugänglich. Zudem bleibt somit auch das Werkzeug 40 (nicht gezeigt) im Köcher 20 leicht zugänglich für eine Greifvorrichtung (nicht gezeigt), die das Werkzeug 40 für einen Werkzeugwechsel aus dem Köcher 20 entfernt, wenn sich der Köcher 20 in Wechselposition befindet, bzw. ein Werkzeug 40 nach Gebrauch wieder in den Köcher 20 zurücksetzt.

In Fig. 3 gezeigt sind weiterhin mehrere röhrenförmige Verriegelungsabschnitte 207 an der Köcheraußenseite für die Verriegelung des Werkzeugs im Köcher.. Der Werkzeugköcher 20 weist mehrere dieser Verriegelungsröhren 207 bzw. mehrere Röhrengruppen an seinem hinteren Ende auf. Damit können verschieden geformte Werkzeuge 40 im Köcher 20 fixiert werden, so dass eine einzige Ausführungsform des Köchers 20 verschiedene Werkzeugtypen wie beispielsweise SK-, CAT- oder BT-Werkzeuge aufnehmen kann.

Weiterhin weist das Kettenglied 10 entlang einer Linie von einer ersten Position 1041 an der vierten Seite 104 der Grundfläche 100, die vom Köcher 20 abgewandt ist, zu einer zweiten Position 1032 an der dritten Seite 103 der Grundfläche 100, die dem Köcher 20 zugewandt ist, eine durchgängige Öffnung 108 durch das Kettenglied 10 auf. Außerdem weist der Köcher 20 entlang der Werkzeugachse W eine durchgängige Öffnung 202 durch den Köcher 20 auf, so dass das hintere Ende des Köchers 20 röhrenförmig ausgebildet ist. In der Transportposition bilden die durchgängigen Öffnungen 108 und 202 von Kettenglied 10 und Köcher 20 eine einzige durchgängige Öffnung entlang der Achse W. Diese Öffnung 108, 202 kann beispielsweise genutzt werden, um den Köcher 20 mit Hilfe eines stabförmigen Elements, das durch die durchgängige Öffnung 108, 202 geführt ist, in der Transportposition zu halten. Zudem kann das Werkzeug 40 durch Einschieben eines Zylinders in das röhrenförmige hintere Ende des Köchers 20 aus dem Köcher 20 ausgeworfen werden, auch durch das Kettenglied 10 hindurch. Außerdem wird durch die durchgängige Öffnung 108 im Kettenglied 10 das Gewicht des Kettenglieds 10 reduziert.

In Fig. 3 gezeigt sind weiterhin die Position und Orientierung der Wälzlager 3014-3017, die zur Lagerung der Gelenkkette 301 im Werkzeugmagazin 30 sowie zur Aufnahme des Kippmoments des Köchers 20 dienen. In diesem Ausführungsbeispiel ist ein Wälzlager 3014 an der Ecke von zweiter und vierter Seite 102, 104 des Kettenglieds 10 angebracht. Außerdem sind zur gemeinsamen Aufnahme der Werkzeuggewichtskraft je ein Wälzlager 3015, 3017 an der Ober- bzw. Unterseite des Kettenglieds 10 an der vierten Seite 104 der Grundfläche 100 angebracht. Diese Wälzlager 3014, 3015, 3017 dienen zur Lagerung der Gelenkkette 301 und ermöglichen eine reibungsarme Umlaufbewegung der Kette 301 im Werkzeugmagazin 30. Das Wälzlager 3016 am Köcher 20 dient zur Unterstützung der Lagerung der Kette 301 beim Kettenumlauf und zur Aufnahme des Verschwenkmoments bzw. zum Stop der Verschwenkbewegung des Köchers 20. Dazu ist das Wälzlager 3016 zweckmäßigerweise parallel zu den Wälzlagern 3015 und 3017 orientiert; die Wälzlagerachse des Lagers 3016 kann aber auch um bis zu 45° gegenüber der Wälzlagerachse der Lager 3015, 3017 verkippt sein.

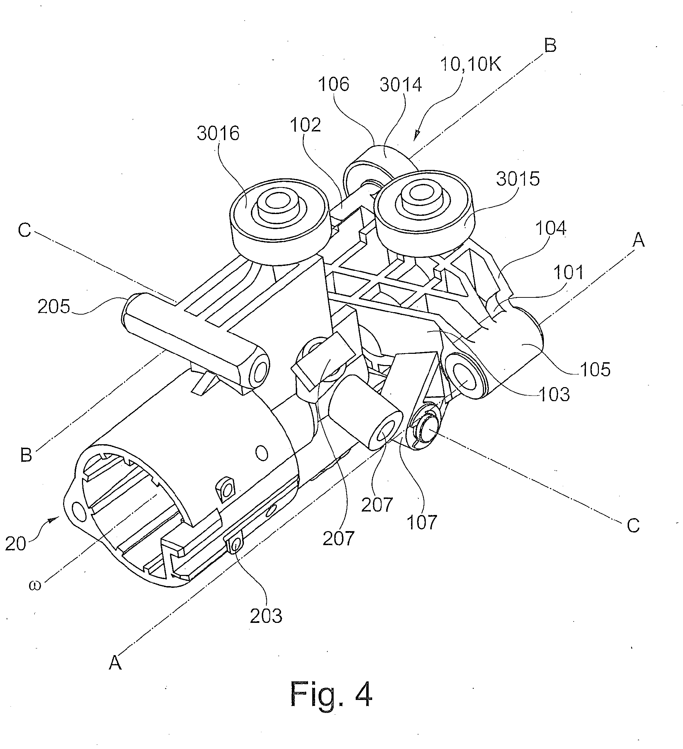

Fig. 4 zeigt das Kettenglied 10 und den Köcher 20 aus Fig. 3 aus einer anderen Perspektive zur Verdeutlichung der relativen Lagen der Drehachsen A, B, C und der Werkzeugachse W. In dieser Ansicht befindet sich die Werkzeugachse W zwischen den Drehachsen A und B. Die Drehachse C verläuft unterhalb der Achsen A, B und W und senkrecht zu diesen. Der Köcher 20 ist, wie das Kettenglied 10, einteilig herstellbar und kann aus Metall oder Kunststoff als Spritzgussteil hergestellt werden. Die Verbindung der Kettenglieder 10 untereinander und mit den Köchern 20 erfolgt durch einfaches Ineinanderstecken der jeweiligen Gelenkabschnitte 105, 106, 107, 206 und Verbindungsbolzen 3011-3013, ohne dass eine weitere mechanische Nachbearbeitung nötig ist.

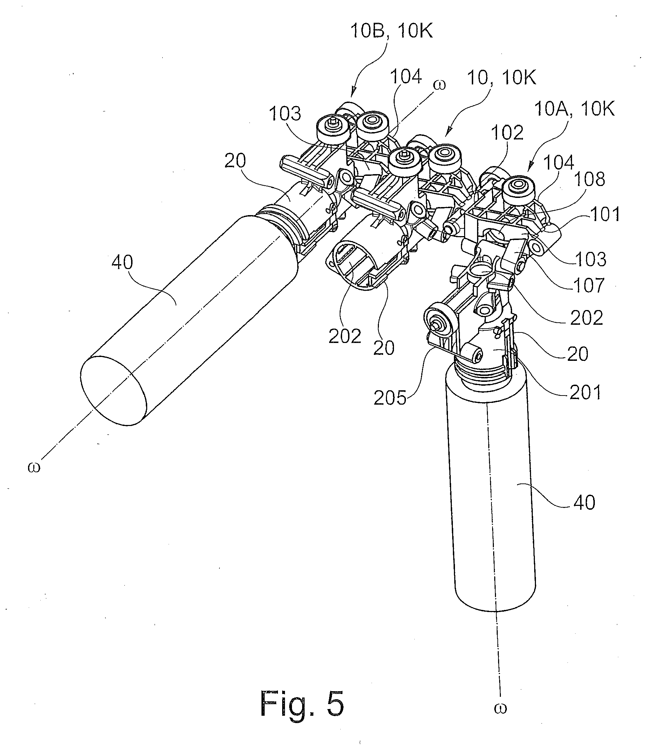

Fig. 5 zeigt einen Ausschnitt der Gelenkkette 301 mit drei Kettengliedern 10, 10A, 10B, von denen jedes mit einem Werkzeugköcher 20 verbunden ist. Die Köcher 20, die mit den Kettengliedern 10 und 10B verbunden sind, befinden sich in Transportposition; der Köcher 20, der mit dem Kettenglied 10A verbunden ist, befindet sich in Wechselposition. In den Köchern 20, die mit den Kettengliedern 10A und 10B verbunden sind, ist je ein Werkzeug 40 aufgenommen. Aus Fig. 5 ist ersichtlich, dass bei einem Verschwenken von der Transportposition in die Wechselposition die Werkzeugachse W um 90° nach unten verschwenkt wird. In der Wechselposition sind somit die Achsen A, C und W paarweise senkrecht orientiert, wobei sich jedoch keine der Achsen A, C und W schneiden. In Fig. 5 sind für das Kettenglied 10A und den damit verbundenen Köcher 20 die durchgängigen Öffnungen 108, 202 des Kettenglieds 10A und des Köchers 20 sichtbar, die in der Wechselposition nicht mehr eine einzelne durchgängige Öffnung bilden.

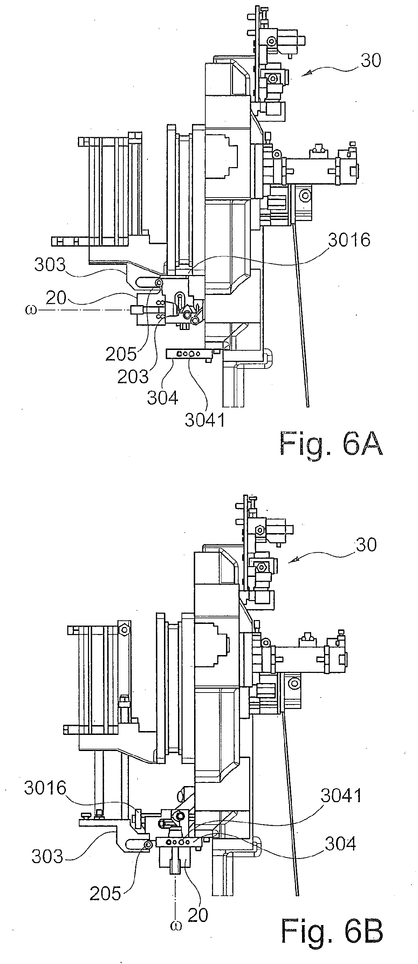

Der Schwenkvorgang des Köchers 20 ist in Figs. 6A/B für ein erfindungsgemäßes Werkzeugmagazin 30 gezeigt. Fig. 6A zeigt das Werkzeugmagazin 30, wobei sich der Köcher 20 an einer Position im Magazin 30 befindet, an der die Schwenkbewegung von einer Transportposition des Köchers 20 in eine Wechselposition des Köchers 20 durchgeführt wird. Während der Umlaufbewegung der Kette 301 befinden sich alle Köcher 20 des Magazins 30 in Transportposition. Ist durch die Umlaufbewegung, die in zwei entgegengesetzten Richtungen durchgeführt werden kann, das gewünschte Werkzeug 40 an die Stelle im Magazin 30 transportiert worden, an der der Werkzeugwechsel durchgeführt werden kann, wird der Köcher 20 mit dem Werkzeug 40 in die Wechselposition, wie in Fig. 6B gezeigt, geschwenkt. Diese Bewegung wird mit Hilfe einer pneumatisch arbeitenden Schwenkvorrichtung 303 ausgeführt, die am Angriffsabschnitt 205 des Köchers 20 angreift und den Köcher 20 um die Drehachse C nach unten verkippt. Die Schwenkvorrichtung 303 befindet sich auf einer maschinenabgewandten Seite des Werkzeugmagazins 30; das heißt, die Gelenkkette 301 befindet sich zwischen der Schwenkvorrichtung 303 und der Werkzeugmaschine (nicht gezeigt). Weil die Schwenkvorrichtung 303 und die Greifvorrichtung der Werkzeugmaschine, die den Werkzeugwechsel durchführt, an gegenüberliegenden Seiten des Köchers 20 angreifen, wenn sich der Köcher 20 in Wechselposition befindet, wird dadurch der Raumbedarf für alle Komponenten verringert. Das Werkzeugmagazin 30 samt Schwenkvorrichtung 303 kann zudem leicht von der Werkzeugmaschine getrennt werden und zu einer anderen Werkzeugmaschine gebracht werden.

Weiterhin weist das Werkzeugmagazin 30 einen Anschlagabschnitt 304 auf, der zum Stoppen der Verschwenkbewegung des Köchers 20 und zur Ausrichtung des Köchers 20 in der Wechselposition dient. Der Anschlagabschnitt 304 ist so ausgebildet, dass er auf einer dem Köcher 20 abgewandten Seite einen Anschluss 3041 zum Anschließen einer externen Reinigungsvorrichtung 50 (nicht gezeigt) aufweist. Durch Löcher im Anschlagabschnitt 304 und Löcher 203 im Köcher 20 kann so der Innenraum des leeren Köchers 20 in der Wechselposition mit Druckluft ausgeblasen und dadurch gereinigt werden.

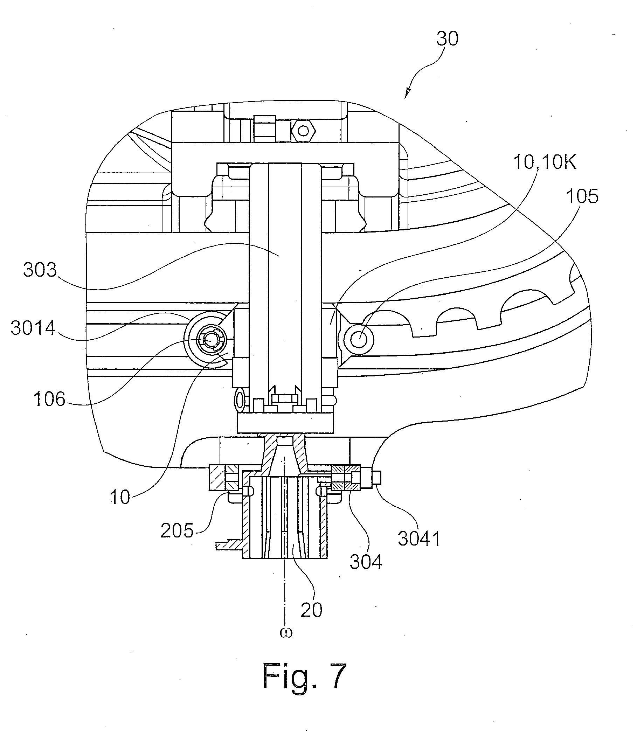

Fig. 7 zeigt einen vergrößerten Ausschnitt des Kettenglieds 10 und des damit verbundenen Köchers 20 in Wechselposition im Werkzeugmagazin 30. Ebenfalls gezeigt ist die Schwenkvorrichtung 303 sowie der Anschlagabschnitt 304 des Werkzeugmagazins 30 mit dem Anschluss 3041 für die Köcherausblasvorrichtung 50. Das Kettenglied 10 ist an dieser Stelle im Werkzeugmagazin 30 so in der Kette 301 positioniert, dass seine Grundfläche 100 parallel zum Boden ist. Weitere, mit dem Kettenglied 10 verbundene Kettenglieder 10 sind in dieser Ansicht zur besseren Übersicht nicht gezeigt.

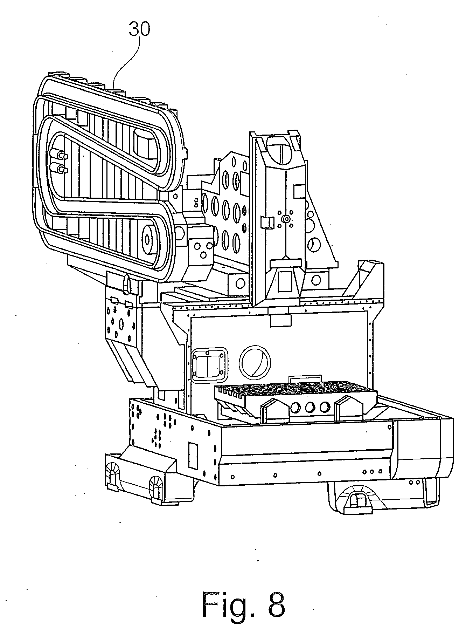

Fig. 8 zeigt den Aufbau einer Werkzeugmaschine und eines erfindungsgemäßen Werkzeugmagazins 30 zur Verdeutlichung der Umlaufbewegung und der Form der im Magazin 30 gelagerten Gelenkkette 301. Die Kette 301 selbst ist nicht gezeigt. Mit einer Gelenkkette 301 aus erfindungsgemäßen Kettengliedern 10 und daran befestigten Werkzeugköchern 20 ist es möglich, die Kette 301 mit Hilfe eines Kettenantriebs 302 auf einer Bahn wie in Fig. 8 gezeigt, umlaufen zu lassen. Dabei kann die Kette 301 vorlaufen oder zurücklaufen. Die Umlaufbahn hat mehrere enge Kurven. Mit einer Gelenkkette 301 aus erfindungsgemäßen Kettengliedern 10 ist es möglich, die Kette 301 auch entlang solch enger Kurven zu führen, da zwei benachbarte Kettenglieder 10 auch mit daran befestigten Köchern 20 um einen großen Winkel gegeneinander um die Drehachsen A bzw. B sowohl im Uhrzeigersinn als auch gegen den Uhrzeigersinn verdreht werden können. Somit kann ein kompaktes Werkzeugmagazin 30 mit großer Werkzeugkapazität, beispielsweise für 60 bis 120 Werkzeuge, bereitgestellt werden.

### LISTE DER BEZUGSZEICHEN

- **10**: Kettenglied
- **10A**: erstes benachbartes Kettenglied
- **10B**: zweites benachbartes Kettenglied
- **10K**: erstes Kettenglied
- **100**: Grundfläche
- **101**: erste Seite
- **102**: zweite Seite
- **103**: dritte Seite
- **1031**: erste Position an der dritten Seite
- **1032**: zweite Position an der dritten Seite
- **1033**: dritte Position an der dritten Seite
- **104**: vierte Seite
- **1041**: erste Position an der vierten Seite
- **1042**: zweite Position an der vierten Seite
- **1044**: vierte Position an der vierten Seite
- **1045**: zweiter Wälzlageraufnahmeabschnitt
- **1046**: dritter Wälzlageraufnahmeabschnitt
- **105**: erster Gelenkabschnitt
- **106**: zweiter Gelenkabschnitt
- **1061**: erster Gelenkabschnittsteil
- **1062**: zweiter Gelenkabschnittsteil
- **1063**: erster Wälzlageraufnahmeabschnitt
- **107**: dritter Gelenkabschnitt
- **108**: erste durchgängige Öffnung

- **20**: Werkzeugköcher
- **201**: Werkzeugaufnahmeabschnitt des Werkzeugköchers
- **202**: zweite durchgängige Öffnung
- **203**: zweite Öffnung des Werkzeugköchers
- **204**: Wälzlageraufnahmeabschnitt des Werkzeugköchers
- **205**: Angriffsabschnitt
- **206**: Gelenkabschnitt des Werkzeugköchers
- **207**: Verriegelungsabschnitt
- **A**: erste Drehachse
- **B**: zweite Drehachse
- **C**: dritte Drehachse
- **W**: Werkzeugachse

- **30**: Werkzeugmagazin
- **301**: Gelenkkette
- **3011**: erstes Verbindungselement
- **3012**: zweites Verbindungselement
- **3013**: drittes Verbindungselement
- **3014**: erstes Wälzlager
- **3015**: zweites Wälzlager
- **3016**: drittes Wälzlager
- **3017**: viertes Wälzlager
- **302**: Kettenantrieb
- **303**: Schwenkvorrichtung
- **304**: Anschlagabschnitt
- **3041**: Anschluss

- **40**: Werkzeug

- **50**: Reinigungsvorrichtung

## Patentansprüche

1. Werkzeugmagazin (30) für eine Werkzeugmaschine, mit
- einer Gelenkkette (301) aus einer Mehrzahl von miteinander verbundenen, gleich geformten Kettengliedern (10) zum Werkzeugtransport, wobei eine Grundfläche jedes Kettenglieds (10) durch vier Seiten (101-104) begrenzt ist,
- einem Kettenantrieb (302) zur Umlaufbewegung der Gelenkkette (301),
- einem Werkzeugköcher (20), der mit einem ersten Kettenglied (10K) der Mehrzahl von Kettengliedern (10) an einer dritten Seite (103) der vier Seiten (101-104) des ersten Kettenglieds (10K) verbunden ist, wobei der Werkzeugköcher (20) einen Werkzeugaufnahmeabschnitt (201) zur Aufnahme eines Werkzeugs (40) aufweist und wobei bei aufgenommenem Werkzeug (40) das Werkzeug (40) im Werkzeugköcher (20) eine Werkzeugachse (W) definiert, und
- einer Schwenkvorrichtung (303) zum Verschwenken des Werkzeugköchers (20) relativ zum ersten Kettenglied (10K) von einer Transportposition in eine Wechselposition,
wobei in der Transportposition der Werkzeugköcher (20) eine Strecke von einer ersten Position (1041) an einer vierten, der dritten Seite (103) gegenüberliegenden Seite (104) der vier Seiten (101-104) des ersten Kettenglieds (10K) bis zu einer zweiten Position (1032) an der dritten Seite (103) des ersten Kettenglieds (10K) um eine Länge des Werkzeugköchers (20) in Richtung der Werkzeugachse (W) verlängert,
**dadurch gekennzeichnet, dass**
das erste Kettenglied (10K) eine erste durchgängige Öffnung (108) von einer dritten Position (1033) an der dritten Seite (103) zu einer vierten Position (1044) an der vierten Seite (104) aufweist,
der Werkzeugköcher (20) eine zweite durchgängige Öffnung (202) in Richtung der Werkzeugachse (W) aufweist, und
in der Transportposition die erste durchgängige Öffnung (108) und die zweite durchgängige Öffnung (202) aneinandergrenzen und eine durchgängige Öffnung durch das erste Kettenglied (10K) und den Werkzeugköcher (20) bilden.

2. Werkzeugmagazin (30) nach Anspruch 1, wobei
der Werkzeugköcher (20) sowohl in der Transportposition als auch in der Wechselposition nur an die dritte Seite (103) der vier Seiten (101-104) des ersten Kettenglieds (10K) angrenzt.

3. Werkzeugmagazin (30) nach einem der vorhergehenden Ansprüche, wobei
die Kettenglieder (10) eine Transportebene definieren, und die Kettenglieder (10) so in der Gelenkkette (301) positioniert sind, dass für jedes Kettenglied (10) die Grundfläche (100) des Kettenglieds (10) senkrecht zur Transportebene ist.

4. Werkzeugmagazin (30) nach einem der vorhergehenden Ansprüche, wobei
sich die Krümmungsrichtung der Gelenkkette (301) ändert.

5. Werkzeugmagazin (30) nach einem der vorhergehenden Ansprüche, wobei
die Gelenkkette (301) wälzgelagert ist, und insbesondere der Werkzeugköcher (20) einen Wälzlageraufnahmeabschnitt (204) zur Aufnahme eines dritten Wälzlagers (3016) aufweist.

6. Werkzeugmagazin (30) nach einem der vorhergehenden Ansprüche, wobei
der Werkzeugköcher (20) einen Verriegelungsabschnitt (207) zur Verriegelung und Entriegelung des Werkzeugs (40) aufweist.

7. Werkzeugmagazin (30) nach einem der vorhergehenden Ansprüche, mit einem Anschlagabschnitt (304) zum Ausrichten des Werkzeugköchers (20) in der Wechselposition, wobei der Anschlagabschnitt (304) einen Anschluss (3041) zum Anschließen einer Reinigungsvorrichtung (50) zum Reinigen des Werkzeugköchers (20) aufweist und eine zweite Öffnung (203) des Werkzeugköchers (20) in der Wechselposition mit dem Anschlagabschnitt (304) in Kontakt ist.

8. Werkzeugmagazin (30) nach einem der vorhergehenden Ansprüche, wobei jedes Kettenglied aufweist:
einen ersten Gelenkabschnitt (105) entlang einer ersten Seite (101) der vier Seiten (101-104) zur Aufnahme eines ersten Verbindungselements (3011) zur Verbindung des Kettenglieds (10) mit einem ersten benachbarten Kettenglied (10A),
wobei der erste Gelenkabschnitt (105) eine erste Drehachse (A) einer Drehbewegung des ersten benachbarten Kettenglieds (10A) relativ zum Kettenglied (10) definiert,
einen zweiten Gelenkabschnitt (106) entlang einer zweiten, zur ersten Seite (101) parallelen Seite (102) der vier Seiten (101-104) zur Aufnahme eines zweiten Verbindungselements (3012) zur Verbindung des Kettenglieds (10) mit einem zweiten benachbarten Kettenglied (10B),
wobei der zweite Gelenkabschnitt (106) eine zweite Drehachse (B) einer Drehbewegung des zweiten benachbarten Kettenglieds (10B) relativ zum Kettenglied (10) definiert, und
einen dritten Gelenkabschnitt (107) an einer dritten Seite (103) der vier Seiten (101-104) zur Aufnahme eines dritten Verbindungselements (3013) zur Verbindung des Kettenglieds (10) mit einem Werkzeugköcher (20),
wobei der dritte Gelenkabschnitt (107) eine dritte Drehachse (C) einer Drehbewegung des Werkzeugköchers (20) relativ zum Kettenglied (10) definiert,
wobei die erste Drehachse (A) und die zweite Drehachse (B) eine erste Ebene definieren, die erste Ebene parallel zur Grundfläche (100) des Kettenglieds (10) ist, und die dritte Drehachse (C) außerhalb der ersten Ebene liegt.

9. Werkzeugmagazin (30) nach Anspruch 8, wobei
in der Transportposition die Werkzeugachse (W) in der ersten Ebene des ersten Kettenglieds (10K) liegt.

10. Werkzeugmagazin (30) nach Anspruch 8 oder 9, wobei
der Werkzeugköcher (20) einen Angriffsabschnitt (205) zum Angreifen der Schwenkvorrichtung (303) aufweist, wobei der Angriffsabschnitt (205) als Längselement ausgebildet ist, dessen Längsachse parallel zur dritten Drehachse (C) des ersten Kettenglieds (10K) ist.

11. Werkzeugmagazin (30) nach einem der Ansprüche 8 bis 10, wobei die Kettenglieder (10) jeweils trapezförmig sind, und
die jeweilige erste Seite (101) die kürzeste Seite des jeweiligen Trapezes ist; und/oder
die Kettenglieder (10) jeweils einteilig sind und aus Kunststoff oder Metall bestehen.

12. Werkzeugmagazin (30) nach einem der Ansprüche 8 bis 11, wobei die Kettenglieder (10) jeweils aufweisen:
einen ersten Wälzlageraufnahmeabschnitt (1063) am zweiten Gelenkabschnitt (106) zur Aufnahme eines ersten Wälzlagers (3014),
einen zweiten Wälzlageraufnahmeabschnitt (1045) zur Aufnahme eines zweiten Wälzlagers (3015), und
einen dritten Wälzlageraufnahmeabschnitt (1046) zur Aufnahme eines dritten Wälzlagers (3017),
wobei der zweite Wälzlageraufnahmeabschnitt (1045) und der dritte Wälzlageraufnahmeabschnitt (1046) eine Achse definieren, die senkrecht zur Grundfläche (100) des entsprechenden Kettenglieds (10) ist, und
wobei der zweite Wälzlageraufnahmeabschnitt (1045) und der dritte Wälzlageraufnahmeabschnitt (1046) auf gegenüberliegenden Seiten der Grundfläche (100) des entsprechenden Kettenglieds (10) ausgebildet sind.

13. Werkzeugmaschine, mit
einem Werkzeugmagazin (30) nach einem der Ansprüche 1 bis 12, und
einer Reinigungsvorrichtung (50) zum Reinigen des Werkzeugköchers (20).

## Claims

1. A tool magazine (30) for a machine tool, comprising:
- a link chain (301) consisting of a plurality of equally formed chain links (10) linked with each other for tool transport, wherein a base area of each chain link (10) is limited by four sides (101-104),
- a chain drive (302) for causing a circulating movement of said link chain (301),
- a tool receptacle (20) attached to a first chain link (10K) of said plurality of chain links (10) at a third side (103) of said four sides (101-104) of said first chain link (10K), said tool receptacle (20) having a tool receiving portion (201) for receiving a tool (40), wherein, when said tool (40) is received, said tool (40) defines a tool axis (W); and
- a pivot device (303) for pivoting said tool receptacle (20) with respect to said first chain link (10K) from a transport position into an exchange position,
wherein, in said transport position, said tool receptacle (20) extends a distance from a first position (1041) at said fourth side (104) of said four sides (101-104) of said first chain link (10K) opposing said third side (103) to a second position (1032) at said third side (103) of said first chain link (10K) by a length of said tool receptacle (20) in the direction of said tool axis (W),
**characterized in that**
said first chain link (10K) includes a first continuous opening (108) extending from a third position (1033) at said third side (103) to a fourth position (1044) at said fourth side (104),
said tool receptacle (20) includes a second continuous opening (202) in the direction of said tool axis (W), and
in said transport direction, said first continuous opening (108) and said second continuous opening (202) border each another and form a continuous opening through said first chain link (10K) and said tool receptacle (20).

2. The tool magazine (30) according to claim 1, wherein,
both in said transport position and said exchange position, said tool receptacle (20) borders only on said third side (103) of said four sides (101-104) of said first chain link (10K).

3. The tool magazine (30) according to one of the preceding claims, wherein
said chain links (10) define a transport plane, and said chain links (10) are positioned in said link chain (301) such that, for each chain link (10), said base area (100) of said chain link (10) is perpendicular to said transport plane.

4. The tool magazine (30) according to one of the preceding claims, wherein
the direction of curvature of said link chain (301) changes.

5. The tool magazine (30) according to one of the preceding claims, wherein
said link chain (301) is supported by a rolling bearing, and, in particular, said tool receptacle (20) has a rolling bearing receiving portion (204) to receive a third rolling bearing (3016).

6. The tool magazine (30) according to one of the preceding claims, wherein
said tool receptacle (20) has a locking portion (207) for locking and unlocking said tool (40).

7. The tool magazine (30) according to one of the preceding claims, comprising
a stop portion (304) for orientating said tool receptacle (20) in said exchange position, wherein said stop portion (304) has a connector (3041) for connecting a cleaning device (50) for cleaning said tool receptacle (20) and a second opening (203) of said tool receptacle (20) is in contact with said stop portion (304) in said exchange position.

8. The tool magazine (30) according to one of the preceding claims, each of the chain links comprising:
a first link portion (105) along a first side (101) of said four sides (101-104) for receiving a first connection element (3011) for connecting said chain link (10) with a first adjacent chain link (10A),
wherein said first link portion (105) defines a first axis of rotation (A) of a rotating movement of the first adjacent chain link (10A) relative to said chain link (10),
a second link portion (106) along a second side (102) of said four sides (101-104) parallel to said first side (101) for receiving a second connection element (3012) for connecting said chain link (10) with a second adjacent chain link (10B),
wherein said second link portion (106) defines a second axis of rotation (B) of a rotating movement of the second adjacent chain link (10B) relative to said chain link (10), and
a third link portion (107) at a third side (103) of said four sides (101-104) for receiving a third connection element (3013) for connecting said chain link (10) with a tool receptacle (20),
wherein said third link portion (107) defines a third axis of rotation (C) of a rotating movement of said tool receptacle (20) relative to said chain link (10),
wherein said first axis of rotation (A) and said second axis of rotation (B) define a first plane, said first plane being parallel to said base area (100) of said chain link (10), and said third axis of rotation (C) is located outside the first plane.

9. The tool magazine (30) according to claim 8, wherein,
in said transport position, said tool axis (W) is located in said first plane of said first chain link (10K).

10. The tool magazine (30) according to claim 8 or 9, wherein
said tool receptacle (20) has an engagement portion (205) for engaging said pivot device (303), wherein said engagement portion (205) is formed as a longitudinal element, the longitudinal axis of which is parallel to said third axis of rotation (C) of said first chain link (10K).

11. The tool magazine (30) according to one of claims 8 to 10, wherein each of the chain links (10) is trapezoidal, and
the respective first side (101) is the shortest side of the respective trapezoid; and/or
each of the chain links (10) is in an integral part and consists of a plastic material or metal.

12. The tool magazine (30) according to one of claims 8 to 11, each of the chain links (10) comprising:
a first rolling bearing receiving portion (1063) on said second link portion (106) for receiving a first rolling bearing (3014),
a second rolling bearing receiving portion (1045) for receiving a second rolling bearing (3015), and
a third rolling bearing receiving portion (1046) for receiving a third rolling bearing (3017),
wherein said second rolling bearing receiving portion (1045) and said third rolling bearing receiving portion (1046) define an axis which is perpendicular to said base area (100) of the corresponding chain link (10), and
wherein said second rolling bearing receiving portion (1045) and said third rolling bearing receiving portion (1046) are formed on opposite sides of said base area (100) of the corresponding chain link (10).

13. A machine tool, comprising:
the tool magazine (30) according to one of the preceding claims 1 to 12, and
a cleaning device (50) for cleaning the tool receptacle (20).

## Revendications

1. Magasin d'outils (30) pour une machine-outil, comportant
- une chaîne articulée (301) constituée d'une pluralité de maillons de chaîne (10) interconnectés et de forme identique pour le transport d'outils, une surface de base de chaque maillon de chaîne (10) étant délimitée par quatre côtés (101 - 104),
- un entraînement de chaîne (302) pour le mouvement de révolution de la chaîne articulée (301),
- un carquois à outil (20) relié à un premier maillon de chaîne (10K) de ladite pluralité de maillons de chaîne (10) sur un troisième côté (103) desdits quatre côtés (101 - 104) dudit premier maillon de chaîne (10K), ledit carquois à outil (20) ayant une partie de réception d'outil (201) pour recevoir un outil (40), et ledit outil (40) définissant un axe d'outil (W) dans ledit carquois à outil (20), lorsque ledit outil (40) est reçu, et
- un dispositif de pivotement (303) pour faire pivoter le carquois à outil (20) par rapport au premier maillon de chaîne (10K) depuis une position de transport jusque dans une position de changement,
dans lequel
dans la position de transport, le carquois à outil (20) prolonge d'une longueur du carquois à outil (20), en direction de l'axe d'outil (W), un trajet s'étendant à partir d'une première position (1041) sur un quatrième côté (104), opposé au troisième côté (103), des quatre côtés (101 - 104) du premier maillon de chaîne (10K) jusqu'à une seconde position (1032) sur le troisième côté (103) du premier maillon de chaîne (10K),
**caractérisé en ce que**
le premier maillon de chaîne (10K) présente une première ouverture traversante (108) depuis une troisième position (1033) sur le troisième côté (103) jusqu'à une quatrième position (1044) sur le quatrième côté (104),
le carquois à outil (20) présente une seconde ouverture traversante (202) en direction de l'axe d'outil (W), et
dans la position de transport, la première ouverture traversante (108) et la seconde ouverture traversante (202) sont adjacentes l'une à l'autre et forment une ouverture traversante à travers le premier maillon de chaîne (10k) et le carquois à outil (20).

2. Magasin d'outils (30) selon la revendication 1,
dans lequel
le carquois à outil (20) n'est adjacent qu'au troisième côté (103) des quatre côtés (101 - 104) du premier maillon de chaîne (10K), tant en position de transport qu'en position de changement.

3. Magasin d'outils (30) selon l'une des revendications précédentes,
dans lequel
les maillons de chaîne (10) définissent un plan de transport, et les maillons de chaîne (10) sont positionnés de telle sorte dans la chaîne articulée (301) que la surface de base (100) du maillon de chaîne (10) est perpendiculaire au plan de transport, pour chaque maillon de chaîne (10).

4. Magasin d'outils (30) selon l'une des revendications précédentes,
dans lequel
la direction de courbure de la chaîne articulée (301) varie.

5. Magasin d'outils (30) selon l'une des revendications précédentes,
dans lequel
la chaîne articulée (301) est montée sur un palier à roulement, et en particulier le carquois à outil (20) comprend une partie de réception de palier à roulement (204) pour recevoir un troisième palier à roulement (3016).

6. Magasin d'outils (30) selon l'une des revendications précédentes,
dans lequel
le carquois à outil (20) comprend une partie de verrouillage (207) pour verrouiller et déverrouiller l'outil (40).

7. Magasin d'outils (30) selon l'une des revendications précédentes, comportant une partie de butée (304) pour orienter le carquois à outil (20) dans la position de changement, la partie de butée (304) comprenant un raccord (3041) pour raccorder un dispositif de nettoyage (50) pour nettoyer le carquois à outil (20), et une seconde ouverture (203) du carquois à outil (20) étant en contact avec la partie de butée (304), dans la position de changement.

8. Magasin d'outils (30) selon l'une des revendications précédentes,
dans lequel
chaque maillon de chaîne comprend :
une première partie articulée (105) le long d'un premier côté (101) des quatre côtés (101 - 104) pour recevoir un premier élément de liaison (3011) pour relier le maillon de chaîne (10) à un premier maillon de chaîne voisin (10A), la première partie articulée (105) définissant un premier axe de rotation (A) d'un mouvement de rotation du premier maillon de chaîne voisin (10A) par rapport au maillon de chaîne (10),
une seconde partie articulée (106) le long d'un second côté (102) parallèle au premier côté (101) des quatre côtés (101 - 104) pour recevoir un second élément de liaison (3012) pour relier le maillon de chaîne (10) à un second maillon de chaîne voisin (10B),
la seconde partie articulée (106) définissant un second axe de rotation (B) d'un mouvement de rotation du second maillon de chaîne voisin (10B) par rapport au maillon de chaîne (10), et
une troisième partie articulée (107) sur un troisième côté (103) des quatre côtés (101 - 104) pour recevoir un troisième élément de liaison (3013) pour relier le maillon de chaîne (10) à un carquois à outil (20),
la troisième partie articulée (107) définissant un troisième axe de rotation (C) d'un mouvement de rotation du carquois à outil (20) par rapport au maillon de chaîne (10),
le premier axe de rotation (A) et le second axe de rotation (B) définissant un premier plan, le premier plan étant parallèle à la surface de base (100) du maillon de chaîne (10), et le troisième axe de rotation (C) étant à l'extérieur du premier plan.

9. Magasin d'outils (30) selon la revendication 8,
dans lequel
en position de transport, l'axe d'outil (W) se situe dans le premier plan du premier maillon de chaîne (10K).

10. Magasin d'outils (30) selon la revendication 8 ou 9,
dans lequel
le carquois à outil (20) comprend une partie d'attaque (205) pour attaquer le dispositif de pivotement (303), la partie d'attaque (205) étant réalisée sous forme d'élément longitudinal dont l'axe longitudinal est parallèle au troisième axe de rotation (C) du premier maillon de chaîne (10K).

11. Magasin d'outils (30) selon l'une des revendications 8 à 10,
dans lequel
les maillons de chaîne (10) sont chacun en forme trapézoïdale, et
le premier côté respectif (101 ) est le côté le plus court du trapèze respectif ; et/ou
les maillons de chaîne (10) sont chacun d'un seul tenant et sont constitués en matière plastique ou en métal.

12. Magasin d'outils (30) selon l'une des revendications 8 à 11,
dans lequel
les maillons de chaîne (10) comprennent chacun :
une première partie de réception de palier à roulement (1063) sur la seconde partie articulée (106) pour recevoir un premier palier à roulement (3014),
une seconde partie de réception de palier à roulement (1045) pour recevoir un second palier à roulement (3015),
et
une troisième partie de réception de palier à roulement (1046) pour recevoir un troisième palier à roulement (3017),
dans lequel
la seconde partie de réception de palier à roulement (1045) et la troisième partie de réception de palier à roulement (1046) définissent un axe qui est perpendiculaire à la surface de base (100) du maillon de chaîne correspondant (10), et
la seconde partie de réception de palier à roulement (1045) et la troisième partie de réception de palier à roulement (1046) sont réalisées sur des côtés opposés de la surface de base (100) du maillon de chaîne correspondant (10).

13. Machine-outil, comportant
un magasin d'outils (30) selon l'une des revendications 1 à 12, et
un dispositif de nettoyage (50) pour nettoyer le carquois à outil (20).
